# EUROPÄISCHE PATENTSCHRIFT

(11) **EP 1 099 880 B1**
(45) Veröffentlichungstag und Bekanntmachung des Hinweises auf die Patenterteilung: **21.05.2003**
(21) Anmeldenummer: 00890204.1
(22) Anmeldetag: 29.06.2000
(51) Int. Cl.: F16H 55/50, F16H 55/46

(54) **Seilscheibe für Seilbahnanlagen**
Sheave wheel for cable lift
Poulie à câble pour un téléphérique

(30) Priorität: 09.11.1999 AT 189299
(43) Veröffentlichungstag der Anmeldung: 16.05.2001
(73) Patentinhaber: Innova Patent GmbH, 6960 Wolfurt (AT)
(72) Erfinder: Meindl, Bernd, 6971 Hard (AT)
(74) Vertreter: Atzwanger, Richard, Dipl.-Ing. Patentanwalt

(56) Entgegenhaltungen:
- CH-A- 258 395
- DE-A- 1 625 597
- JP-A- 59 187 107
- US-A- 1 887 279
- US-A- 2 306 008
- US-A- 3 110 096
- US-A- 3 391 650
- US-A- 3 987 735

## Beschreibung

Die gegenständliche Erfindung betrifft eine Seilscheibe für Seilbahnanlagen gemäß Oberbegriff des Anspruchs 1.

Es ist bekannt, die einzelnen Bestandteile von Seilbahnanlagen fabriksmäßig herzustellen und sie vom Ort der Herstellung dorthin zu transportieren, wo die Seilbahnanlage errichtet wird. Da dabei der Transport der Anlage in Containern erfolgt, dürfen die einzelnen Bestandteile nur solche Größen aufweisen, welche in die Container passen, weswegen das Erfordernis besteht, große Bestandteile in kleinere Einheiten zu unterteilen.

Da dieses Erfordernis insbesondere bei Seilscheiben besteht, ist es bekannt, diese in zwei Hälften zu unterteilen. Die bekannte Unterteilung erfolgt dabei derart, daß die mindestens eine Teilungslinie das Zentrum der Seilscheibe durchsetzt, wodurch auch die Nabe geteilt wird. Eine derartige Unterteilung ist jedoch deshalb nachteilig, da es eines sehr hohen Aufwandes an Fertigung bedarf, um für die geteilte Nabe die erforderliche Präzision zu gewährleisten. Zudem kann mit einer geteilten Nabe keinesfalls die Festigkeit einer ungeteilten Nabe erzielt werden.

Der gegenständlichen Erfindung liegt somit die Aufgabe zugrunde, eine Seilscheibe für Seilbahnanlagen zu schaffen, bei welcher, obgleich sie in mindestens zwei Bestandteile unterteilt ist, die den bekannten unterteilten Seilscheiben anhaftenden Nachteile vermieden werden. Dies wird erfindungsgemäß dadurch erzielt, daß sich die mindestens eine Teilungslinie radial außerhalb der Nabe befindet und damit die Nabe nicht geteilt wird. Vorzugsweise verläuft die mindestens eine Teilungslinie längs einer Sekante. Nach einer bevorzugten Ausführungsform weist die Scheibenfläche zwei zueinander parallele Teilungslinien auf, welche sich von der Scheibenachse in einem Abstand von einem Viertel bis drei Viertel des Radius der Seilscheibe befinden, wobei sich insbesondere die beiden Teilungslinien im Abstand von etwa zwei Fünftel des Radius von der Achse der Seilscheibe befinden. Vorzugsweise sind die Teilstücke in an sich bekannter Weise mit längs der mindestens einen Teilungslinie angeordneten, quer zur Seilscheibe abragenden Flanschen ausgebildet, mittels welcher die Teilstücke zur vollständigen Seilscheibe starr verbindbar sind, wobei sich insbesondere die Flansche in an sich bekannter Weise an beiden Seiten der Scheibenfläche befinden.

Der Gegenstand der Erfindung ist nachstehend anhand eines in der Zeichnung dargestellten Ausführungsbeispieles näher erläutert. Es zeigen:

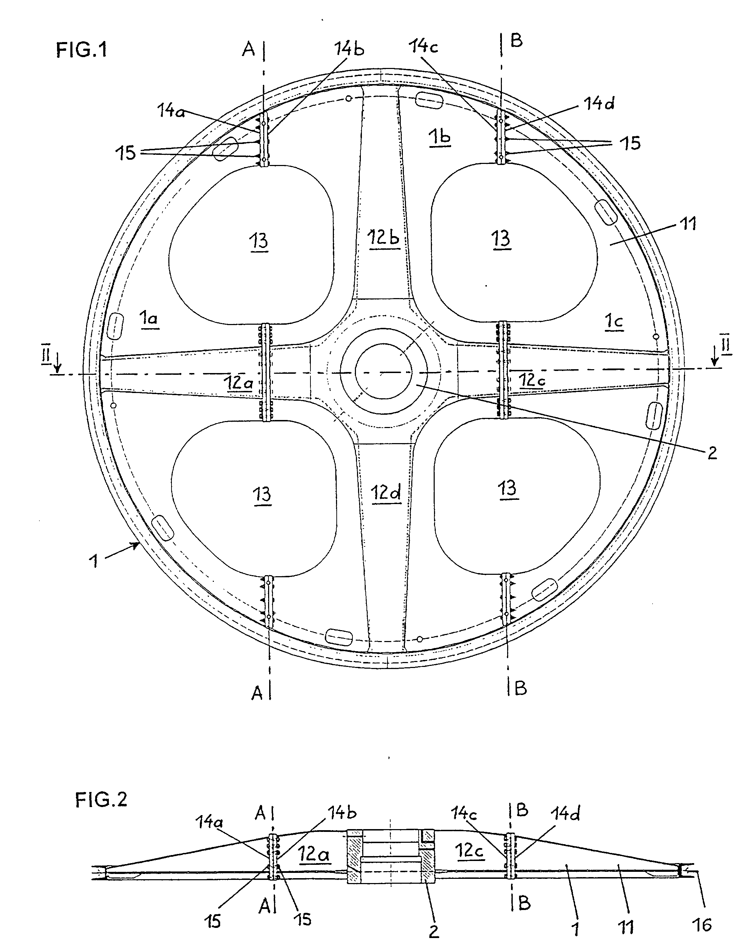

- Fig. 1: eine erfindungsgemäße Seilscheibe, in Draufsicht, und
- Fig. 2: diese Seilscheibe, im Schnitt nach der Linie II-II der Fig.1.

Die in den Fig. und 2 dargestellte Seilscheibe 1 weist ihn ihrem Zentrum eine Nabe 2 auf, welche zur Aufnahme mindestens eines Lagers dient. Die Seilscheibe 1 weist weiters eine Scheibenfläche 11 auf, welche durch vier sternförmig angeordnete Speichen 12a, 12b, 12c und 12d verstärkt ist, wobei sie zwischen den Speichen mit Ausnehmungen 13 ausgebildet ist. An ihrem Außenrand ist die Seilscheibe 1 mit einer Seilrille 16 versehen. Die Speichen 12, welche im Querschnitt U-förmig ausgebildet sind, weisen einen von der Nabe 2 zur Seilrille 16 sich keilförmig verjüngenden Querschnitt auf.

Parallel zu den Speichen 12b und 12d sind im Abstand von etwa zwei Fünftel des Radius der Seilscheibe 1 von der Drehachse entfernte Teilungslinien A und B vorgesehen, längs welcher die Seilscheibe 1 in drei Scheibenteile 1a, 1b und 1c unterteilt ist. Diese Scheibenteile sind längs der Teilungslinien A und B auf ihren beiden Seiten mit quer zur Scheibenfläche abragenden Flanschen 14a, 14b, 14c und 14d ausgebildet, welche mittels Bolzen 15 miteinander starr verbunden sind.

Durch diese Ausbildung der Seilscheibe 1 weisen die Scheibenteile 1a, 1b und 1c solche Größen auf, welche in Containern transportiert werden können. Da jedoch die Teilungslinien A und B außerhalb der Nabe 2 verlaufen, ist diese einstückig, wodurch sie die für die Aufnahme mindestens eines Lagers erforderliche Präzision aufweist und wodurch zudem deren erforderliche Festigkeit gewährleistet ist.

## Patentansprüche

1. Seilscheibe (1) für Seilbahnanlagen mit einer Nabe (2), mit einer von der Nabe (2) ausgehenden, gegebenenfalls speichenförmig ausgebildeten Scheibenfläche (11), weiters mit einer an deren Umfang angeordneten Seilrille (16) und mit an der Scheibenfläche (11) vorgesehenen Befestigungseinrichtungen (14a, 14b, 14c, 14d, 15), mittels derer mindestens zwei Scheibenteile (1a, 1b, 1c) längs mindestens einer Teilungslinie (A, B) miteinander zur vollständigen Seilscheibe (1) starr verbindbar sind, **dadurch gekennzeichnet, daß** die Nabe (2) ungeteilt ist und sich die mindestens eine Teilungslinie (A, B) radial außerhalb der Nabe (2) befindet.

2. Seilscheibe (1) nach Patentanspruch 1, **dadurch gekennzeichnet, daß** die mindestens eine Teilungslinie (A, B) längs einer Sekante verläuft.

3. Seilscheibe (1) nach einem der Patentansprüche 1 und 2, **dadurch gekennzeichnet, daß** die Scheibenfläche (11) mit zwei zueinander parallelen Teilungslinien (A, B) versehen ist, welche sich von der Achse der Seilscheibe (1) in einem Abstand von einem Viertel bis drei Viertel des Radius der Seilscheibe (1) befinden.

4. Seilscheibe (1) nach Patentanspruch 3, **dadurch gekennzeichnet, daß** sich die beiden Teilungslinien (A, B) im Abstand von etwa zwei Fünftel des Radius der Seilscheibe (1) von der Achse der Seilscheibe (1) befinden.

5. Seilscheibe (1) nach einem der Patentansprüche 1 bis 4, **dadurch gekennzeichnet, daß** die Scheibenteile (1a, 1b, 1c) mit längs der mindestens einen Teilungslinie (A, B) angeordneten, quer zur Seilscheibe (1) abragenden Flanschen (14a, 14b, 14c, 14d) ausgebildet sind, mittels welcher die Scheibenteile (1a, 1b, 1c) zur vollständigen Seilscheibe (1) starr verbindbar sind.

6. Seilscheibe nach Patentanspruch 6, **dadurch gekennzeichnet, daß** sich die Flansche (14a, 14b, 14c, 14d) an beiden Seiten der Seilscheibe (1) befinden.

## Claims

1. A cable sheave (1) for aerial cableway installations, having a hub (2), a sheave surface (11) extending out from the hub (2) and optionally constructed in spoke form, also a cable groove (16) arranged at the circumference thereof and fastening means (14a, 14b, 14c, 14d, 15) provided at the sheave surface (11), by means of which fastening means (14a, 14b, 14c, 14d, 15) at least two sheave parts (1a, 1b, 1c) may be connected rigidly together along at least one dividing line (A, B) to form the complete cable sheave (1), **characterised in that** the hub (2) is undivided and the at least one dividing line (A, B) is located radially outside the hub (2).

2. A cable sheave (1) according to claim 1, **characterised in that** the at least one dividing line (A, B) extends along a secant.

3. A cable sheave (1) according to one of claims 1 and 2, **characterised in that** the sheave surface (11) is provided with two mutually parallel dividing lines (A, B), which are spaced from the axis of the cable sheave (1) by a quarter to three quarters of the radius of the cable sheave (1).

4. A cable sheave (1) according to claim 3, **characterised in that** the two dividing lines (A, B) are spaced from the axis of the cable sheave (1) by approximately two fifths of the radius of the cable sheave (1).

5. A cable sheave (1) according to one of claims 1 to 4, **characterised in that** the sheave parts (1a, 1b, 1c) are constructed with flanges (14a, 14b, 14c, 14d) arranged along the at least one dividing line (A, B) and projecting perpendicularly to the cable sheave (1), by means of which flanges (14a, 14b, 14c, 14d) the sheave parts (1a, 1b, 1c) may be connected rigidly to form the complete cable sheave (1).

6. A cable sheave according to claim 6, **characterised in that** the flanges (14a, 14b, 14c, 14d) are located on both sides of the cable sheave (1).

## Revendications

1. Poulie de câble (1) pour installations de téléphérique comportant un moyeu (2), comportant une surface de poulie (11) partant du moyeu (2) et éventuellement en forme de rayons, comportant en outre une gorge (16) pour câble disposée sur sa circonférence et comportant des dispositifs de fixation (14a, 14b, 14c, 14d, 15) prévus sur la surface de poulie (11), au moyen desquels au moins deux parties (1a, 1b 1c) de la poulie peuvent être reliées rigidement entre elles, le long d'au moins une ligne de division (A, B), pour constituer la poulie de câble (1) complète, **caractérisée en ce que** le moyeu (2) n'est pas divisé et **en ce que** la ou les ligne(s) de division (A, B) se trouve(nt) radialement à l'extérieur du moyeu (2).

2. Poulie de câble (1) selon la revendication 1, **caractérisée en ce que** la ou les ligne(s) de division (A, B) s'étende(nt) le long d'une sécante.

3. Poulie de câble (1) selon l'une des revendications 1 ou 2, **caractérisée en ce que** la surface de poulie (11) est pourvue de deux lignes de division (A, B) parallèles l'une à l'autre, qui se trouvent, par rapport à l'axe de la poulie de câble (1), à une distance d'un quart à trois quarts du rayon de la poulie de câble (1).

4. Poulie de câble (1) selon la revendication 3, **caractérisée en ce que** les deux lignes de division (A, B) se trouvent à une distance d'environ deux cinquièmes du rayon de la poulie de câble (1), de l'axe de la poulie de câble (1).

5. Poulie de câble (1) selon l'une des revendications 1 à 4, **caractérisée en ce que** les parties (1a, 1b, 1c) de la poulie comportent des brides (14a, 14b, 14c, 14d) disposées le long d'au moins une ligne de division (A, B) et dépassant transversalement de la poulie de câble (1), au moyen desquelles les parties (1a, 1b, 1c) de la poulie peuvent être reliées rigidement pour constituer la poulie de câble (1) complète.

6. Poulie de câble selon la revendication 6, **caractérisée en ce que** les brides (14a, 14b, 14c, 14d) se trouvent des deux côtés de la poulie de câble (1).
